# EUROPEAN PATENT APPLICATION

(11) **EP 3 939 823 A1**
(43) Date of publication of application: **19.01.2022**
(21) Application number: 20185428.8
(22) Date of filing: 13.07.2020
(51) Int. Cl.: B60L 53/14, B60L 53/53, B60L 53/55, H02J 7/34

(54) **CHARGING OF ELECTRIC VEHICLES**

(71) Applicant: ABB Schweiz AG, 5400 Baden (CH)
(72) Inventor: Nieto, Carlos, 75301 Jüri, Rae Vald (EE); Turk, Danel, 75301 Jüri, Rae Vald (EE)
(74) Representative: Kolster Oy Ab

(57) **Abstract**

A method of operating a charging station of an electric vehicle and a charging station. the charging station comprising multiple of charging points for charging electrical vehicles and an energy storage system, the charging station being connected to an electrical network for providing power to the multiple of charging points and the energy storage system is adapted to be charged from the electrical network and adapted to provide power to the multiple of charging points. The method comprises receiving information of a vehicle required to be charged in a charging point, providing a signal from the charging point to the energy storage system indicating the approaching charging, receiving the signal from the charging point in an energy storage system, ramping down charging of the energy storage system if the energy storage system is being charged, and providing power from the energy storage system to the multiple of charging points if the charging power from the multiple of charging points exceeds the power limit of the electrical network, and charging the vehicle.

## Description

### BACKGROUND OF THE INVENTION

Electric vehicles are vehicles which are powered by one or multiple of batteries which are carried in the vehicle. Electric vehicles can be in form of any known vehicle, that is, a car, a van, a bus or a truck, for example. The batteries in the vehicle provide electrical power to one or multiple of electric motors to rotate the wheels of the vehicle. Further, the auxiliary systems of an electrical vehicle are also powered by the one or multiple of batteries.

The batteries of electric vehicles require charging. In some uses of electrical vehicles the charging should be provided as quickly as possible. For example, when an electric bus requires charging during service, the charging time should preferably be short. The charging of electric buses can be made at certain charging stations which are preferably located at the route of the bus. The charge obtained from each charging operation should enable the bus to drive at least to the next charging station. As alternative example and coping with the growth of electric cars, the charging of these cars can be made at certain charging stations which are located at the roadside. Roadside charging stations are becoming more popular due to increase in number of electric cars.

In an electrical bus charging station, a pantograph is lowered from a charging point of the station or raised from the roof of the electrical vehicle to make electrical connection between the vehicle and the charging station. In the case of an electric car charging station, the electrical connection is made by means of a cable which can be liquid cooled to allow high current density and reduced weight or by means of an automated charging arm. A charging station is connected to an electrical network for providing power to the charging station and to further feed the power to the electrical vehicle. A charging station may also comprise an electrical storage system which has a battery or corresponding electric storage. The purpose of the electrical storage system is to be a back-up in case the electrical network goes down and to provide charging power to the electrical vehicles in addition to the power obtained from the network. As known, power can be drawn from the electric network only up to a certain limit. When an electrical storage system is employed, the power that is fed to the vehicles can exceed the grid limit when power is also drawn from the electrical storage system to charge the vehicles.

While an electrical storage system increases the power output from the grid connected charging station, it also increases the complexity of the system. The total charging power of the electrical storage system and of the charging points exceeds the grid limit. Therefore sudden changes in charging power of the vehicles and the changes in charging or discharging power from the electrical storage system may lead to a situation in which the system tries to feed power to back to the network or the grid limit is exceeded. Some network companies may allow consumers to feed power back to the network. However, some of the network companies does not allow it. Further, when the grid limit is exceeded, a fuse is typically blown upstream the charging station which disturbs the operation of the charging station for a longer period of time.

### BRIEF DESCRIPTION OF THE INVENTION

An object of the invention is to provide a method and a system for implementing the method so as to alleviate the above disadvantages. The objects of the invention are achieved by a method and a system which are characterized by what is stated in the independent claims. The preferred embodiments of the invention are disclosed in the dependent claims.

The invention is based on the idea of controlling the operation of the system such that prior to each vehicle charging action, the power from the electrical storage system is changed based on information of the charging action that is going to take place. Once the power from the electrical storage system is controlled prior to the charging, power is not fed back to the network and the limit of the network is not exceeded.

Further, in a preferred embodiment, a budget if formed for each charging of electric vehicle. The budget may include the power or current with which the electric vehicle is charged and the time duration of the charging. This allocation of the power helps controlling the charging operation of both the electrical vehicles and the battery of the electrical storage system at the same time the grid is kept within its limits.

### BRIEF DESCRIPTION OF THE DRAWINGS

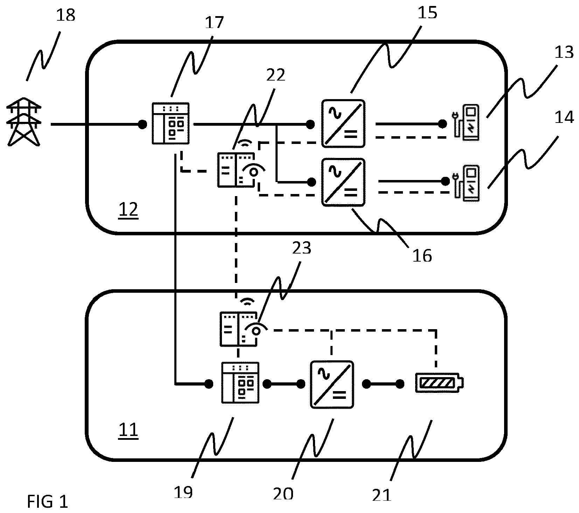

In the following the invention will be described in greater detail by means of preferred embodiments with reference to the attached drawings, in which
Figure 1 shows a simplified structure of a charging station with an electrical storage system.

### DETAILED DESCRIPTION OF THE INVENTION

Figure 1 shows a simplified structure of a charging station of an embodiment of the invention. The charging station comprises an energy storage system 11 and a charging system 12. The charging system and the energy storage system are shown to be connected together electrically and with a communication link. In Figure 1, the electrical connections are shown with a black line while communication connections are shown as dotted lines.

The charging system 12 is shown with two charging points 13, 14. The charging points can be either charging posts which have typically cables or pantographs which are lowered to corresponding inputs situated in a roof of a vehicle. The charging points are shown to be connected to corresponding converters 15, 16 which operated to provide charging current or power to the charging points when a vehicle is being charged. The charging system further includes a connection point 17 to which electrical network or grid 18 is connected. The connection point 17 is shown in Figure 1 to be within a switchgear and controlgear.

The energy storage system 11 of the embodiment of Figure 1 comprises another connection point 19, which is also shown to be within another switchgear and controlgear. The connection point 19 is connected to the connection point of the charging system and power from the grid 18 is fed to the connection point 19. Further, the connection point 19 of the energy storage is connected to a converter 20 of the energy storage system, which is again connected to an electrical energy storage, such as a battery 21. The converter 20 of the energy storage system is a converter which is able to both rectify electrical power and to invert electrical power. The electrical power is converted from AC to DC, i.e. rectified when the battery is charged. When power is drawn from the battery, the electrical power is converted from DC to AC, i.e. inverted.

The connection point 17 forms the point of common coupling. In a point of common coupling the system is connected to the network. As shown in Figure 1, the energy storage system is connected to the point of common coupling. Therefore, when operated to generate alternating voltage from the battery 21, the generated voltage has to be synchronized with the voltage of the grid. At the same time, the charging system 12 may be operated without the knowledge of the operation of the electrical storage system.

In the method of operating a charging station of an electric vehicle, the charging station comprising multiple of charging points 13, 14 for charging electrical vehicles and an energy storage system 11, the charging station being connected to an electrical network for providing power to the multiple of charging points. The energy storage system 11 is adapted to be charged from the electrical network and adapted to provide power to the multiple of charging points 13, 14.

In the method of the invention information of a vehicle required to be charged in a charging point is received and a signal is provided from the charging point to the energy storage system indicating the approaching charging.

When an electric vehicle arrives to a charging station, a communication is started between the vehicle and the charging point. The information that a vehicle is connected is sent from the charging point to the energy storage system.

Further, according to the disclosure, upon receipt of the signal from the charging point, the charging of the energy storage system is ramped down in case the energy storage system is being charged. Thus when the energy storage system receives information from the charging point that a vehicle is soon to be charged, the energy storage stops drawing power from the electrical network in case the charging of the energy storage battery was ongoing.

In case the battery of the energy storage system is not being charged when the information is received, the energy storage system increases power from the energy storage system to the multiple of charging points in case the charging power from the multiple of charging points exceeds the power limit of the electrical network. Thus if the energy storage system is idle or already producing power to the point of common coupling, the discharging power is increased. When the discharging power is increased, power taken from the grid is decreased at the same time. In all the cases the increase of power is done in full synchronization with the power demand by the electric vehicles.

After the change in the operation state of the energy storage system, the vehicle is charged from the charging point.

The communication between the electric vehicle to be charged and the charging point may be started when the vehicle sends a signal to the charging point to lower the pantograph or when then user proceeds with the authentication in the changing post. According to an embodiment, the communication is started when a signal from an approaching vehicle is detected or when the vehicle is plugged in. The signal which is used may be any known signal, such as Bluetooth, wifi signal or a signal in a fiber optic link. For electric buses, the communication may thus be started before the vehicle is in a charging position.

The information of the vehicle to be charged contains in an embodiment a charge request, which is a request of charging power, request of charging energy, request of charging current and/or request of charging time. Further, the information may also contain other data, such as the state of charge of the battery of the vehicle or any other data which relates to the state of charge. Further, the information of the vehicle may also contain data relating to the battery type of the vehicle.

Once the request of charging power or any other request is received by the charging point, the charging point forwards the request to a controller of the charging station. In the charging station the current status of the system is known. The current status of the system includes information of the charging power or current of the other charging points, the state of charge of the battery of the energy storage system and the operation mode and power or current to or from the energy storage system. Based on the status of the system, the controller of the charging station provides a budget for the charging. The budget is typically a value of charging current or power and its timely duration if the duration is known. The budget is allocated for the specific charging operation based on the request and on the status of the system.

As an example, an electrical vehicle arrives to a charging station and information of the vehicle is received in a charging point. The current status of the charging station is such that no other vehicles in other charging points, electric network is available and energy storage system is being charged with full capacity of the supplying network. As the information of the vehicle to be charged is received in the charging point, the information is transmitted from the charging point to the energy storage system, which reduces it's charging power to zero or almost to zero. The vehicle also informs the charging point that it requests, for example, 75 kW of power for a certain time period. As no other vehicles are charged, a budget according to the request is allocated for the vehicle.

The charging power of the energy storage was ramped down, and after the change in the charging power of the energy storage system, the charging of the vehicle can be started. Considering that the electric network can supply 100 kW, capacity is still left in the network such that the charging of the energy storage system may be continued with power of 25 kW, considering no other loads are present. After the charging of the vehicle is started, the charging of the energy storage system may be continued with a power that takes into account the provided budget. The ramping down of the charging of the energy storage system ensures that the power taken from the network does not exceed the capacity of the network for the whole period of charging of the electrical vehicle.

Considering that the above charging of the vehicle is still in progress, and another vehicle arrives and information of the vehicle is received in a free charging point. The status of the charging station is again known. The vehicle requests charging power of 75 kW. The total charging power of the charging station is the sum of capacity of the network (100 kW) and the charging capacity of the energy storage system (100kW). The free capacity of the charging station exceeds the requested capacity, and a budget according to the request is provided. When the information of the charging is received, the charging of the energy storage system is ramped down in the case the energy storage is performing charging. Further, as the budgeted capacity together with the ongoing budgeted charging exceeds the capacity of the network, the energy storage system changes its operation mode and starts to discharge and supply power towards the charging system. After the change in the charging power of the energy storage system the charging of the vehicle can be started. When the power limit of the network is exceeded with the calculated budget, the energy storage system produces power such that the charging of electric vehicle does not exceed the power limit.

Thus in a preferred embodiment, a charge request is provided and a budget for charging is determined based on the charge request. Further, the given budget for charging is used in determining whether and how much the energy storage system should provide power to the multiple of charging points. In determining the budget for charging also the current status of the charging station is taken into account. That is, when a charge request is received, the charging station knows the current state of the station based on given parameters, such as the power capacity of the energy storage system, network power limit, and already budgeted charging actions that are currently ongoing. When providing a budget for charging, the charging station can be operated to take into account the various factors that affect the operation of the charging station. This further ensures that the network limit will not be exceeded at any time.

Instead of providing a budget for charging based on the request of the vehicle, the charging station may also assign a general budget either for each vehicle or for vehicles which do not send any requests. When a general budget is assigned, the charging is carried out with a current or power which is suitable for the vehicle. The general budget is treated similarly in the method as vehicle specific budgets.

In an embodiment of the invention, when a budgeted charging requires the use of the energy storage system for providing power, the power from the energy storage system is increased to the level required by the budget, and after the increase of the power, the charging of the electric vehicle is started.

In another embodiment, the increase of power of the energy storage system is synchronized with the budgeted charging. That is, if the energy storage system is already producing power to the charging points and a new budgeted charging is starting, the increase of power from the energy storage system is synchronized with the charging of the vehicle. The synchronization is carried out using the controller 22 which is present in the charging system 12 and controller 23 which is present in the energy storage system 11. As indicated in Figure 1, the controllers are connected to each other via communication connections enabling to send and receive data, such as reference values and measurement values as well as possible alarms.

According to an embodiment of the invention, when one or multiple of charging points are in operation, and the network limit is not exceeded, the energy storage system can be charged if the state of charge of the battery in the energy storage system is below a certain limit value. As capacity in the network is available, it is advisable to charge the energy storage system. The limit value for determining whether to start charging the energy storage system may be for example 40 % of the full charge of the battery. Further, as the charging points of the charging station provide current or power which is budgeted and known, the energy storage system has knowledge of the power it may use for own charging such that the network limit is not exceeded.

In the charging station when a budgeted charging will exceed the network limit, i.e. the capacity of the electric network, the charging of the energy storage system is first ramped down. The ramping down of the charging is initiated preferably as soon as indication of the arriving vehicle is received. When the energy storage system does not draw any power, the charging of the vehicle may be started with the synchronized charging and discharging as indicated above. In another alternative the energy storage system produces power according to the budget, and after the power from the energy storage system has increased, the budgeted charging of the vehicle is started.

According to an embodiment of the invention, the energy storage system provides reactive compensation to the electric network to support the voltage of the network. In a known manner, inverters can be operated to produce reactive current or reactive power to support the network. The amount of reactive current may be increased with increasing power from the network or the compensation may be dependent on the measured voltage and/or frequency of the common point of coupling.

It will be obvious to a person skilled in the art that, as the technology advances, the inventive concept can be implemented in various ways. The invention and its embodiments are not limited to the examples described above but may vary within the scope of the claims.

## Claims

1. A method of operating a charging station of an electric vehicle, the charging station comprising multiple of charging points for charging electrical vehicles and an energy storage system, the charging station being connected to an electrical network for providing power to the multiple of charging points and
the energy storage system is adapted to be charged from the electrical network and adapted to provide power to the multiple of charging points, the method comprising
receiving information of a vehicle required to be charged in a charging point,
providing a signal from the charging point to the energy storage system indicating the approaching charging,
receiving the signal from the charging point in an energy storage system,
ramping down charging of the energy storage system if the energy storage system is being charged, and
providing power from the energy storage system to the multiple of charging points if the charging power from the multiple of charging points exceeds the power limit of the electrical network, and
charging the vehicle.

2. A method according to claim 1, wherein the signal provided from the charging point to the energy storage system includes a charge request for charging power, charging current or charging energy, and the method comprises
determining a budget for charging based on the charge request,
in the step of providing power from the energy storage system, using the determined budget for charging for checking whether the charging power from the multiple of charging points exceeds the power limit of the electrical network, and
in the step of charging the vehicle, charging the vehicle according to the determined budget.

3. A method according to claim 2, wherein the energy storage system is operated to provide power to the charging points, the amount of power being determined by the budget for charging, the ongoing chargings from the other charging points and the limit of the electric network.

4. A method according to claim 3, wherein the energy storage system is operated to provide power to the charging points prior to starting of the budgeted charging.

5. A method according to claim 3, wherein the energy storage system is operated to provide power to the charging points such that the power from the energy storage system is increased in synchronism with the budgeted charging.

6. A method according to any of the previous claims 1 to 5, wherein the energy storage system produces reactive current to support the electric network.

7. A charging station for an electric vehicle, the charging station comprising multiple of charging points for charging electrical vehicles and an energy storage system, the charging station being connectable to an electrical network for providing power to the multiple of charging points and
the energy storage system is adapted to be charged from the electrical network and adapted to provide power to the multiple of charging points, wherein the charging station comprises
means adapted to receive information of a vehicle required to be charged in a charging point,
means adapted to provide a signal from the charging point to the energy storage system indicating the approaching charging,
means adapted to receive the signal from the charging point in an energy storage system, and
a controller adapted to ramp down charging of the energy storage system if the energy storage system is being charged, and
adapted to provide power from the energy storage system to the multiple of charging points if the charging power from the multiple of charging points exceeds the power limit of the electrical network, and
means adapted to charge the vehicle.
